**Europäisches Patentamt**

**European Patent Office**

**Office européen des brevets**

(19)

(11) Veröffentlichungsnummer : **0 153 903**
**B1**

(12) # EUROPÄISCHE PATENTSCHRIFT

(45) Veröffentlichungstag der Patentschrift :
09.11.88

(51) Int. Cl.⁴ : **H 04 N   7/14**

(21) Anmeldenummer : 85730028.9

(22) Anmeldetag : 26.02.85

(54) **Nachrichtensystem für Bildkonferenzen.**

(30) Priorität : 29.02.84 DE 3407857

(43) Veröffentlichungstag der Anmeldung :
04.09.85 Patentblatt 85/36

(45) Bekanntmachung des Hinweises auf die Patenterteilung : 09.11.88 Patentblatt 88/45

(84) Benannte Vertragsstaaten :
**AT BE CH DE FR GB IT LI LU NL SE**

(56) Entgegenhaltungen :
**DE-A- 1 914 874**
**DE-C- 2 104 337**
**US-A- 3 519 744**
**F. Ohmann: "Kommunikations-End-geräte", Sprin-**
**ger-Verlag 1983, Seiten 414-423**

(73) Patentinhaber : **Heinrich-Hertz-Institut für Nachrich-**
**tentechnik Berlin GmbH**
**Einsteinufer 37**
**D-1000 Berlin 10 (DE)**

(72) Erfinder : **Boerger, Georg, Prof. Dr.-Ing.**
**Mörchinger Strasse 134**
**D-1000 Berlin 37 (DE)**
Erfinder : **Romahn, Götz, Dr.-Ing.**
**Schützallee 28 c**
**D-1000 Berlin 37 (DE)**

(74) Vertreter : **Wolff, Konrad**
**Heinrich-Hertz-Institut für Nachrichtentechnik Berlin**
**GmbH Einsteinufer 37**
**D-1000 Berlin 10 (DE)**

EP 0 153 903 B1

## Beschreibung

Die Erfindung bezieht sich auf ein Nachrichtensystem für Bildkonferenzen der im Oberbegriff des Patentanspruches 1 angegebenen Art.

Einen umfassenden Überblick zum Stand der Technik auf auf diesem Gebiet bietet das Buch « Kommunikations-Endgeräte » — Grundlagen, Verfahren, Bausteine, Systeme — Herausgeber : Friedrich Ohmann, Springer-Verlag, Berlin, Heidelberg, New York, Tokyo 1983, in dessen Abschnitt 7.5 « Bildkonferenz », Seiten 414 bis 423. Danach wird für Bildkonferenzen gefordert, daß sich alle Teilnehmer dauernd gleichzeitig und richtungsgetreu sehen und hören und sich gegenseitig schriftliche Unterlagen und Gegenstände zeigen können. Abgesehen von den technischen Einrichtungen, die an jedem Standort für die Durchführung einer Bildkonferenz mindestens erforderlich sind, steigt dabei der technische Aufwand für die Endeinrichtungen und deren Vermaschung, sofern keine, jeweils mit unterschiedlichen Vor- und Nachteilen verbundenen, besonderen Maßnahmen vorgesehen werden, in nicht vertretbarem Umfang mit der Anzahl der zu einer Bildkonferenz zusammenzuschaltenden Standorte.

Zur Verringerung des technischen Aufwandes, insbesondere bezüglich der Bild-Aufnahme, -Übertragung und -Wiedergabe, sind Parallel-Verarbeitung und Umschaltung sowie daraus gebildete Mischformen anwendbar. Die erstgenannte Maßnahme ermöglicht eine Verringerung der Anzahl der benötigten Endgeräte und Kanäle. Dazu müssen jedoch jeweils mehrere Konferenzteilnehmer an einem gemeinsamen Standort anwesend sein. Die andere Maßnahme erlaubt, immer nur ein Bild zu allen Teilnehmern senden zu müssen, erfordert daher keine Vollvermaschung, jedoch ein ständiges Umschalten, z. B. sprachgesteuert oder manuell durch einen Konferenzleiter, vornehmlich einen der Konferenzteilnehmer.

Der als trivial erscheinende Lösungsansatz, jeden Konferenzteilnehmer mit derart kompletten Endeinrichtungen auszustatten, daß Bild und Ton jedes Teilnehmers individuell an alle anderen Konferenzorte zu übertragen und dort jeweils mit eigenem Lautsprecher und Bildschirm wiederzugeben sind, muß zweifellos wegen des erforderlichen technischen Aufwandes verworfen werden. Demzufolge beschränkt sich eine große Anzahl bisher bekannt gewordener Bildkonferenzsysteme auf solche, bei denen sich die Konferenzteilnehmer an zwei Standorten zusammenfinden, zwischen denen dann eine nachrichtentechnische Punkt-zu-Punkt-Verbindung für Bild und Ton in Hin- und Rückrichtung hergestellt wird (Studio-Konferenz, Besprechungszimmer-Konferenz). Auch bei den als « Arbeitsplatz-Konferenz » bezeichneten Bildkonferenz-Systemen wird die nachrichtentechnische Hauptverbindung — z. B. über ein öffentliches Netz — zwischen zwei Orten hergestellt, wobei die einzelnen, jeweils die Mindestausstattung an Endeinrichtungen aufweisenden Arbeitsplätze im selben Gebäude oder am selben Ort über Konzentratoren an diesen beiden Orten zusammengefaßt werden.

Aus der DE-C2-2 104 337 ist bereits eine Schaltungsanordnung für eine Fernsprechvermittlungsanlage mit Konferenzeinrichtungen bekannt. Diese Anordnung zielt darauf ab, den einzelnen Teilnehmerstationen, die an einer Konferenzverbindung beteiligt sind, nicht nur — beispielsweise sprachgesteuert — das Bild jeweils einer Teilnehmerstation zu übertragen, sondern darüber hinaus jedem Teilnehmer die Möglichkeit zu geben, ein Sammelbild zu empfangen, das die augenblickliche Zusammensetzung der Konferenzteilnehmer wiedergibt. Dazu ist in der Vermittlungsanlage ein Sammelbildgeber vorgesehen, der eine Bildmischeinrichtung enthält, die aus einer der höchstmöglichen Anzahl von Konferenzteilnehmern entsprechenden Anzahl von Einzelbild-Monitoren und einer sich räumlich vor diesen befindlichen Sammelbildkamera aufgebaut ist. Die Aufteilung des Sammelbildes und die Größe der in diesem wiedergegebenen Einzelbilder werden automatisch in Abhängigkeit von der Anzahl der jeweils an der Konferenzverbindung beteiligten Teilnehmerstationen bestimmt ; bei der Zusammensetzung der Einzelbilder zum Sammelbild können einzelnen Teilnehmerstationen bestimmte Stellen im Sammelbild fest zugeordnet werden, z. B. einem Konferenzleiter das mittlere Feld eines Sammelbildes mit neun Feldern.

Vom Stand der Technik, insbesondere gemäß DE-C2-21 04 337, ausgehend, bezweckt die Erfindung, Bildkonferenzen nach Art von Abeitsplatz-Konferenzen, jedoch zwischen Teilnehmern an mehreren verschiedenen, voneinander unabhängigen Standorten zu ermöglichen und dazu über eine zentrale Vermittlungsanlage die einzelnen Konferenzorte derart durch nachrichtentechnische Mittel miteinander zu verknüpfen, daß alle Bild- und Tonsignale jedes Standortes an alle anderen Standorte gelangen können, es jedoch den Teilnehmern einer solchen Bildkonferenz an den einzelnen Standorten weitestgehend selbst zu überlassen, sich die Zusammensetzungen von Mischbildern aus den Einzelbildern individuell zu bestimmen und ein solches Mischbild oder ein beliebiges Einzelbild zu empfangen. Dabei soll es primär möglich sein, daß sich alle Teilnehmer dauernd gleichzeitig sehen und hören sowie gelegentlich auch schriftliche Unterlagen, Gegenstände und dergleichen zeigen können. Die eingangs genannte Forderung, daß bei Bildkonferenzen sich alle Teilnehmer richtungsgetreu sehen können müssen, gilt dabei nur für solche Teilnehmer, die sich an einem gemeinsamen Standort befinden.

Gemäß der Erfindung wird diese Aufgabe durch die technische Lehre des Patentanspruches 1 gelöst.

Die mit Bildspeichern ausgerüstete Bildkonferenz-Zentrale nimmt dabei einerseits die Vermittlungsfunktion zwischen Quellen und Sinken wahr, andererseits sind nur in ihr, und dazu lediglich im Umfang des tatsächlichen Bildkonferenz-Verkehrs, die technisch verhältnismäßig aufwendigen Einrichtungen für diese Vermittlung sowie für die Aufbereitung der einzelnen Bildsignale zu individuell zusammenzusetzenden Mischbildern für alle anschließbaren Standorte erforderlich. Ähnliches gilt übrigens für die weit weniger aufwendige Tonsignal-Aufbereitung und -Vermittlung, auf die weiter unten noch eingegangen wird. Für jeden Standort sind allerdings die bei Bildkonferenzen nach Art von Studiokonferenzen in der Fernebene als nur eine Punkt-zu-Punkt-Verbindung benötigten beiden Kanäle für die Hin- und die Rückrichtung mit ausreichender Bandbreite für Bild, Ton und Signalisierungen hier nun jeweils zwischen jedem Standort und der Zentrale — wie bei herkömmlichen Fernsprechverbindungen — bereitzustellen.

Auf einen Konferenzleiter für die Bildregie kann bei der erfindungsgemäßen technischen Lehre ohne weiteres verzichtet werden. Da von jedem Standort aus individuell, nach eigenen Vorstellungen und Wünschen, ohne Auswirkungen auf die anderen Standorte, jederzeit beliebig — im Rahmen mehrerer vorgegebener Variationsmöglichkeiten — die Regie selbst zu führen ist, wird mit der Erfindung ein neues Leistungsmerkmal für Bildkonferenz-Dienste geboten. Alle einer eigenen Bildregie unterliegenden, nach Inhalt, Größe und Zusammenstellung auf dem eigenen Monitor darstellbaren Bilder werden als zwischengespeicherte Signale von der Bildkonferenz-Zentrale bereitgestellt und entsprechend als Einzelbild oder als Mischbild in der Größe eines Vollbildes geliefert.

Besonders vorteilhafte Ausführungsformen der Erfindung sind durch die im Neben- und in den betreffenden Unteransprüchen angegebenen Merkmale gekennzeichnet. Mit diesen sind insbesondere folgende Vorzüge verbunden :

Bei Einsatz von Bildspeichern und Multiplexern für die Bildsignale in digitaler Form können herkömmliche Netze, die für die Übertragung von Analogsignalen eingerichtet sind, weiter benutzt werden. Soweit die Anschlußleitungen für die benötigte Bandbreite — d. h. Bildsignale nicht nur in der Norm für Bildfernsprechen mit derzeit 1 MHz, sondern auch für TV-Norm, z. B. 5 MHz Bandbreite oder für künftiges digitales, insbesondere hochauflösendes Fernsehen — HDTV — sowie Sprachsignale nicht nur in Fernsprechqualität mit ca. 3 kHz Bandbreite, sondern Tonsignale mit HiFi-Qualität, auch mehrkanalig, und Steuersignale — und für die benötigte Anzahl von Hin- und Rückkanälen — z. B. im Raummultiplex — nicht geeignet sind, sollte die dann erforderliche Nachrüstung in solcher Weise erfolgen, daß auch künftige Qualitätsanforderungen leicht erfüllt werden können, zumindest nicht unnötig erschwert werden. Nachdem bereits im Ortsnetzbereich mit einer breitbandigen Signalübermittlung über Glasfasern, allerdings Multimode-Gradientenfasern, modernere Wege beschritten werden, sind künftig auch Monomode-Systeme im Orts- und Fernbereich in Betracht zu ziehen.

Konferenzen, nicht nur Bildkonferenzen, finden ihre natürlichen Grenzen bezüglich der Teilnehmerzahl bei mehr als zwei und möglichst nicht mehr als 12 Teilnehmern. Bei Ausführungsformen der Erfindung können die Bildkonferenz-Zentralen mit beliebig vielen Bildspeichern und Multiplexern, mindestens jedoch mit der für eine Bildkonferenz benötigten Anzahl, ausgerüstet sein. Diese Einrichtungen lassen sich bei genügender Anzahl dann in der Zentrale ohne weiteres zu Gruppen für je eine Bildkonferenz zusammenfassen, wobei für jede solche Gruppe ein Satz von entsprechenden Steuereinrichtungen vorhanden sein muß.

Die Art, in der die von den einzelnen Quellen stammenden Bildsignale sowohl vollständig als auch in mindestens einer vergröberten Abbildung, d. h. als Verkleinerung oder Kleinbilder, in der Bildkonferenz-Zentrale zur Verfügung gestellt werden, kann hardwaremäßig z. B. mit Bildspeichern gelöst werden, deren Speicherkapazität größer ist als für ein Großbild. D. h. die Großbilder und Kleinbilder werden bereits so abgelegt, wie sie zur Verfügung stehen sollen. Da aber bei einem Mischbild, das ein Großbild und mehrere Kleinbilder enthält, das Großbild etwas kleiner sein muß als ein Vollbild, d. h. insbesondere dessen Randbereiche, vertikal und/oder horizontal, ein- oder beidseitig, zu unterdrücken sind und dies softwaremäßig beim Auslesen aus einem Bildspeicher vorteilhafter zu lösen ist als hardwaremäßig, sind auch Bildspeicher mit nur der Speicherkapazität für ein Vollbild möglich, bei denen dann das Auslesen des Vollbildes, eines Großbildes und von Kleinbildern durch entsprechende Programme gesteuert erfolgt.

An jedem Standort kann auch das eigene Bild als Vollbild oder in einem Mischbild auf dem eigenen Monitor dargestellt werden, denn bezüglich der gebotenen Freiheiten bei der Bildregie gibt es keinen Unterschied zwischen sendenden und empfangenden Standorten.

Ein Großbild und ein vergröbertes Abbild, d. h. ein Kleinbild, sollte natürlich nur so klein wie nötig und so groß wie möglich sein. Außer der Wiedergabe eines Vollbildes sind bei der Wiedergabe eines Mischbildes, das als solches denselben Umfang wie ein Vollbild hat, die Größen eines Großbildes in Abhängigkeit von der Anzahl und Größe von Kleinbildern im Mischbild und umgekehrt im Rahmen der von der Bildkonferenz-Zentrale vorgegebenen Varianten an jedem Standort frei wählbar. Wird an einem Standort beispielsweise auf ein Mischbild, das Abbilder aller beteiligten Teilnehmer enthält, verzichtet, d. h. einer mehr oder weniger engen Auswahl aus der Teilnehmerrunde der Vorzug gegeben, oder sind ohnehin nur wenige Standorte zu einer Bildkonferenz zusammengeschaltet, können die Kleinbilder verhältnismäßig groß bleiben.

An jedem Standort können sich bis hinab zu einem Teilnehmer befinden, was häufig sogar der Normalfall sein wird. Bei mehreren Teilnehmern an einem gemeinsamen Standort werden diese nebeneinander Platz nehmen. In einem solchen Fall kann vom betreffenden Standort aus mit einer Steuerinformation an die Bildkonferenz-Zentrale bestimmt werden, daß bei dem von dieser Quelle empfangenen Bild nur horizontale Randbereiche unterdrückt und Kleinbilder nicht unter einer bestimmten Mindestbreite beispielsweise mit der Breite von zwei horizontal benachbarten Kleinbildern, bereit gehalten werden sollen.

Werden von einem Standort aus keine Steuerinformationen bezüglich einer Bildregie abgegeben, erhält dieser Standort ein Bildsignal entsprechend einem Standardprogramm aus der Bildkonferenz-Zentrale. Dabei können z. B. auch die von anderen Standorten abgegebenen Steuerinformationen Berücksichtigung finden, gegebenenfalls Mehrheitsentscheidungen ermittelt werden, und vieles andere mehr. Das bedeutet auch, daß eine Bildregie-Wähleinrichtung als Endeinrichtung an einem Standort, wenn auf ihre Benutzung freiwillig verzichtet werden kann, aus technischen Gründen ohne weiteren Nachteil auch entfallen oder ausfallen darf.

Für die Erzeugung von Kleinbildern, also zur Reduktion der Bildpunkteanzahl, kann beispielsweise eine Tiefpaßfilterung durchgeführt werden. Bei Porträts sind jedoch weiche Konturen gegeben, so daß z. B. bei digitalen Speichern nur der Schreibtakt gegenüber eine Vollbildspeicherung geändert zu werden braucht. Darstellungen von schriftlichen Unterlagen und Gegenständen oder dergleichen werden ohnehin zur genauen Betrachtung als Groß- oder Vollbild gewählt, d. h. im Falle eines Kleinbildes einer schriftlichen Unterlage mit weichen, ungenauen Konturen reicht auch eine solche Qualität aus, solange damit das Interesse zur Betrachtung als Groß- oder Vollbild mit schärferen Konturen geweckt werden kann.

Die individuell wählbare Aufteilung eines Mischbildes sollte ausgehen von einer durch ein Standardprogramm der Bildkonferenz-Zentrale vorgegebenen Struktur. Beispielsweise können dabei für fünf an einer Bildkonferenz beteiligte Teilnehmer an jeweils eigenen Standorten das eigene Bild als Großbild, die Abbilder der übrigen vier Teilnehmer als vertikal benachbarte, gleichgroße Kleinbilder am rechten Rand des Bildschirmes dargestellt werden. Dazu wird zunächst das Raster des Mischbildes übermittelt, und jeder Teilnehmer kann nun individuell seine Änderungen im vorgegebenen Raster vornehmen.

Die Vermittlung der Audio-Kanäle kann parallel zur Durchschaltung der Bildsignale, auf jeden Fall ebenfalls in der Bildkonferenz-Zentrale, vorgenommen werden. Im allgemeinen wird auch bei Bildkonferenzen eine gewisse Sprechdisziplin eingehalten, so daß ohnehin nur jeweils ein Teilnehmer zu hören sein wird. Wegen der großen Freiheiten bei der Bildregie kann es bei paralleler Durchschaltung von Audio- und Video-Kanälen jedoch vorkommen, daß z. B. an einem Standort gerade nur ein Vollbild eines Teilnehmers dargestellt wird und ein anderer einen wichtigen Einwurf macht, der dort dann nicht wahrgenommen werden würde. Deshalb ist es zweckmäßig, die Audio-Signale aller anderen Quellen als Summensignal an die eigene Sinke vermittelt zu bekommen. Bei Endeinrichtungen mit Zweikanal-Tonwiedergabe ist es darüber hinaus vorteilhaft, die zu Kleinbildern an der rechten oder der linken Seite eines Monitors gehörigen Sprachsignale entsprechend über den rechten bzw. linken Tonkanal, den zu einem Großbild sowie die zu augenblicklich nicht sichtbaren Teilnehmern gehörigen Tonkanäle aus der Mitte wiederzugeben.

Eine Tonregie-Steuerung mit individuell regelbaren Tonmischern, d. h. regelbaren Zwischenverstärkern für jedes von einer Quelle kommende Tonsignal in der Bildkonferenz-Zentrale und geeignete Tonregie-Endeinrichtungen an den einzelnen Standorten ermöglichen übrigens, den sogenannten Cocktail-Party-Effekt technisch zu simulieren. Möchte sich nämlich ein Teilnehmer akustisch auf einen bestimmten anderen Teilnehmer konzentrieren, dessen Tonsignal ihm im Summensignal zu sehr untergeht, kann er über die Tonregie-Steuerung in der Bildkonferenzzentrale den Pegel des betreffenden Tonsignals erhöhen, gegebenenfalls die Pegel der anderen Tonsignale gleichzeitig etwas absenken.

Hierzu, insbesondere aber auch zum Zwecke der individuellen Bildregie, kann auf einfache Weise den Konferenzteilnehmern ein nützliches Hilfsmittel zur besseren Orientierung in Form von dauernd oder zeitweise in die betreffenden Bilder eingeblendeten Kennmarken geboten werden, die aus Ziffern oder Buchstabenkombinationen, Piktogrammen oder dergleichen gebildet sein können und eine eindeutige und schnelle Zuordnung eines Abbildes zur zugehörigen Quelle und zum zugehörigen Bedienelement an der eigenen Regie-Wähleinrichtung ermöglichen. Mit solchen Maßnahmen wird übrigens wohl der eigentliche Zweck der eingangs genannten Forderung für Bildkonferenz-Systeme nach richtungsgetreuer Wahrnehmbarkeit der übrigen Konferenzteilnehmer erfüllt, nämlich die Orientierung auf einen bestimmten Teilnehmer sowie die richtige Zuordnung der von diesem Teilnehmer ausgehenden Bild- und Tonsignale zu erleichtern.

Ausführungsformen der Erfindung sind auch aus rein übertragungstechnischer Sicht besonders vorteilhaft. Sie lassen sich in Sternnetzen, einer der üblichsten Strukturen öffentlicher Nachrichtennetze, ohne Schwierigkeiten realisieren, wie weiter oben bereits erwähnt ist. Für die technische Abwicklung einer Bildkonferenz in der hier erläuterten Art und Weise ist selbstverständlich eine Bildkonferenz-Zentrale zu wählen, die sich in örtlicher Nähe der Mehrzahl der betreffenden Teilnehmer-Standorte befindet. Weit oder sehr weit davon entfernte Teilnehmer-Standorte können zur Einsparung von Kanalkapazität und Kosten für lange Übertragungswege, z. B. interkontinentale Verbindungen, wenigstens für die Richtung von der Zentrale zu diesen weit entfernten Standorten über einen gemeinsamen Rückkanal versorgt werden. Dann können allerdings immer nur die individuellen Regievorstellungen von einem dieser weit entfernten Standorte für diese einheitlich berücksichtigt werden. Über den akustischen Weg bei der Bildkonferenz läßt sich indes auch ein Wechsel der Regiekompetenz zwischen solchen Standorten vereinbaren.

In der Zeichnung sind schematisch Einzelheiten der Erfindung dargestellt. Dabei zeigen :

Fig. 1 eine Prinzipskizze für ein Bildkonferenz-Nachrichtensystem ;

Fig. 2 ein vereinfachtes Blockschaltbild der Einrichtungen für die Bildsignal-Mischung, -Vermittlung und -Übertragung in der Bildkonferenz-Zentrale ;

Fig. 3 ein vereinfachtes Blockschaltbild mit den Einrichtungen für die Tonsignal-Mischung, -Vermittlung und -Übertragung in der Bildkonferenz-Zentrale ;

Fig. 4 die Größenverhältnisse eines Vollbildes und von drei Varianten für Großbilder ;

Fig. 5 bis 7 drei Varianten für Kleinbilder ;

Fig. 8 bis 11 verschiedene Varianten für die Zusammensetzung von Mischbildern aus Groß- und/oder Kleinbildern und Fig. 12 : ein Gerät mit den Wähl-, Tonregie- und Bildregie-Bedienelementen.

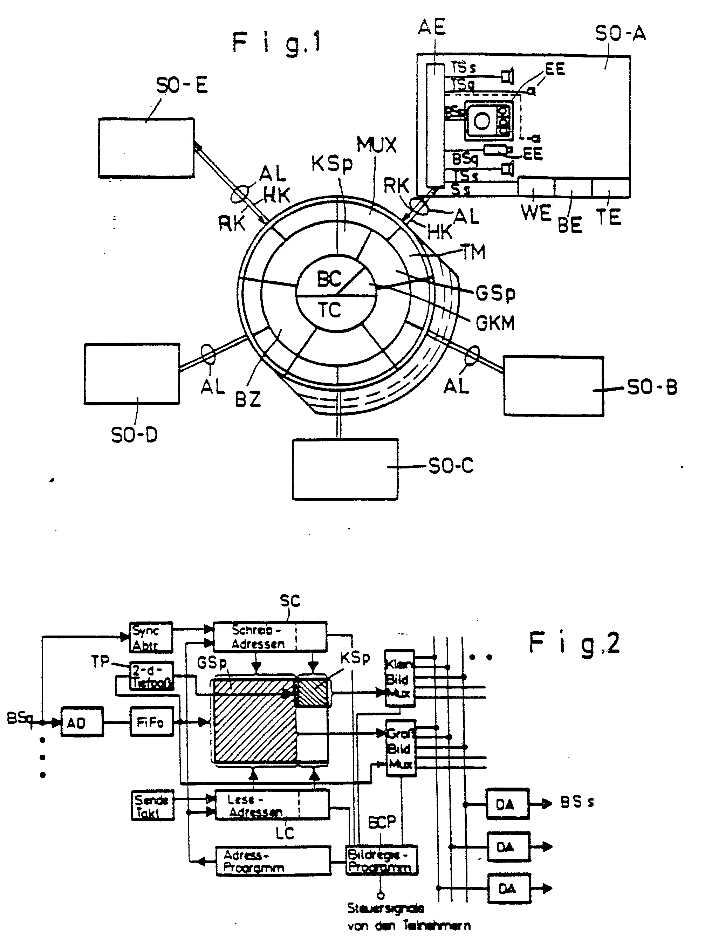

Die Fig. 1 zeigt das Prinzip, das die Erfindung für ein Bildkonferenz-Nachrichtensystem vorsieht. Bezüglich der Leistungsmerkmale dieses Systems kommt diesem die als « Arbeitsplatzkonferenz » bekannte Form am nächsten.

An jedem anschaltbaren Standort SO — dargestellt sind fünf Standorte SO-A..., E — wird als gerätetechnische Ausrüstung (s. den detaillierter dargestellten Standort SO-A) eine Anschlußeinheit AE für folgende Endeinrichtungen EE benötigt :

- Sinken für Bild- und Tonsignale, BSs, TSs, namlich Monitor und Lausprecher,

- Quellen für Bild- und Tonsignale, BSq, TSq, nämlich Kamera und Mikrofon,

- Wähl- und gegebenenfalls Signalisiereinrichtungen, WE, BE, TE für den Aufbau einer Nachrichten-Verbindung bzw. für die Eingabe von Regiekommandos.

Diese gerätetechnische Ausstattung ist weitestgehend mit herkömmlichen und handelsüblichen Mitteln realisierbar. Bezüglich der Tonsignale (Aufnahme, Übertragung, Wiedergabe) sollten Einrichtungen für Zwei- oder Mehrkanalstereofonie vorgesehen sein.

Von einem solchen Standort SO aus können ein oder einige Teilnehmer mit Teilnehmern an anderen, voneinander weit entfernten, untereinander unabhängigen Standorten SO über Anschlußleitungen AL und eine Bildkonferenzzentrale BZ eine Bildkonferenz führen.

Die Anschlußleitungen AL müssen ausgelegt sein für einen Hinkanal HK und einen Rückkanal RK. Der Hinkanal erfordert eine Übertragungskapazität für je nur einen Bildkanal BK, einen Tonkanal TK und einen Signalisierkanal SK.

Der Tonkanal TK kann auch ausgelegt sein für Zwei- oder Mehrkanalstereofonie. Der Signalisierkanal SK wird zunächst für den Aufbau der nachrichtentechnischen Verbindung benötigt, später, d. h. während der bestehenden Konferenzschaltung, gelegentlich für Regiekommandos. Der Rückkanal RK enthält ebenfalls nur einen Bildkanal BK und einen Tonkanal TK, insoweit entsprechend dem Hinkanal HK.

Der technische Aufwand außerhalb der Bildkonferenz-Zentrale BZ geht somit nicht über das Maß hinaus, das auch für einen Teilnehmeranschluß für Bildfernsprechen mit TV-Norm benötigt wird. Hierin liegt zunächst schon ein wesentlicher Vorteil des erfindungsgemäßen Bildkonferenz-Nachrichtensystems, denn damit ist jeder solcher Bildfernsprech-Teilnehmeranschluß auch für Bildkonferenz-Schaltungen geeignet.

Die Bildkonferenz-Zentrale BZ enthält alle technischen Einrichtungen, die für die Verteilung und Mischung der ankommenden Quellensignale zu gehenden Sinkensignalen erforderlich sind, und zwar nur im Umfang des Verkehrsaufkommens für Bildkonferenzschaltungen. Diese Einrichtungen werden jeweils für die Dauer einer Bildkonferenzverbindung den beteiligten Standorten zugeordnet und bestehen im wesentlichen aus Großbildspeichern GSp und Kleinbildspeicher KSp sowie Multiplexern MUX für die Bildsignale BS. Für die Tonsignale sind Tonmischer TM vorgesehen. Die für eine Bildkonferenzschaltung benötigte Anzahl von Großbildspeichern GSp, Kleinbildspeichern KSp, Multiplexern MUX und Tonmischer TM wird, der Anzahl der betreffenden beteiligten Standorte SO entsprechend, jeweils zu einer Gruppe zusammengefaßt und einer solchen Gruppe eine Bildregiesteuerung BC und eine Tonregiesteuerung TC zugeordnet.

Aufbau und Funktion der Bildkonferenz-Zentrale BZ sind bezüglich der Bildsignale BS aus Fig. 2, in der die für einen Standort benötigten zentralen Einrichtungen dargestellt sind, zu entnehmen. Die von einer Kamera stammenden Bildsignale BSq werden einem Analog-/Digitalwandler AD zugeführt und gelangen von dort, gegenenfalls über einen Zwischenspeicher FiFo in einen Großbildspeicher GSp. Aus dem ankommenden Bildsignal BSq wird, z. B. über einen Detektor/Selektor Sync. Abtr. die Synchronisierinformation für eine Schreibsteuerung SC zurückgewonnen. Parallel zum Großbildspeicher GSp wird ein vergröbertes, d. h. in der Bildpunkteanzahl zweidimensional reduziertes Abbild, z. B. durch Tiefpaßfilterung TP erzeugt und in einem Kleinbildspeicher KSp abgelegt.

Ein Bildregie-Prozessor BCP enthält ein Standardprogramm, nach dem Mischbilder MB aus den einzelnen Großbildern GB und/oder Kleinbildern KB in der Größe eines Vollbildes VB zusammengesetzt werden. Durch Steuersignale, die von den einzelnen beteiligten Standorten empfangen werden und individuelle Bildregiekommandos beinhalten, werden — dem Sendetakt entsprechend — über ein Adress-Programm und eine Lesesteuerung LC, gegebenenfalls auch bereits über die Schreibsteuerung SC, die Bildsignale BS für ein Vollbild VB, für Großbilder GB und Kleinbilder KB über Multiplexer MUX geleitet und über einen Digital-/Analog-Wandler DA als individuelles Monitor-Bildsignal BSs auf die betreffende Anschlußleitung gegeben.

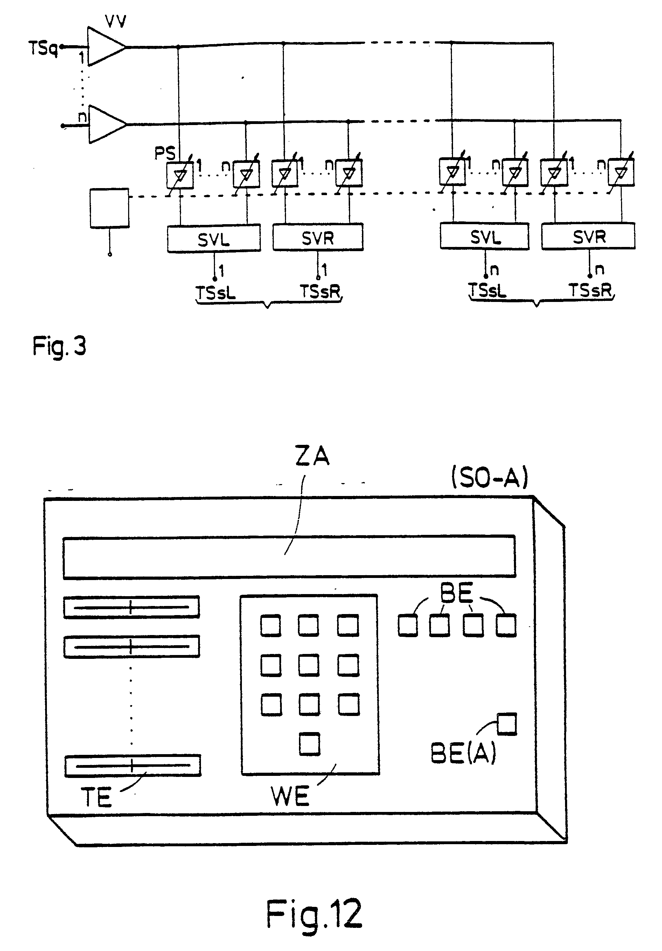

Bezüglich der Tonsignale ist der Aufbau und die Funktion der Bildkonferenz-Zentrale der Fig. 3 zu entnehmen. Die von einem Mikrofon stammenden Tonsignale TSq werden in einem Vorverstärker VV verstärkt und gelangen über Pegelsteller PS auf Summenverstärker SVL für den linken Kanal und einen baugleichen, SVR, für den rechten Kanal. Die Teilnehmer erhalten die Ausgangssignale TSsL und TSsR für die linke und die rechte Tonsinke (z. B. Lautsprecher). Die Verstärkungs- oder Dämpfungswerte der einzelnen Pegelsteller PS können mit Hilfe eines Tonregieprogrammes eingestellt werden. Besonders günstig ist dabei eine Sperrung des Eigentones für jeden Teilnehmer zur Verhinderung akustischer Rückkopplung.

Bezüglich der Tonregie, die auch nach einem für alle Standorte gleichen Standardprogramm, d. h. mit oder ohne individuelle Regie erfolgen kann, befinden sich in der Bildkonferenz-Zentrale BZ beispielsweise also die hier näher erläuterten, im Zusammenhang mit Fig. 1 genannten Einrichtungen — Tonmischer TM und Tonregiesteuerung TC —. Eine technische Simulation des Cocktailparty-Effektes kann in einfacher Weise durch Einstellung der betreffenden Pegelsteller PS herbeigeführt werden, d. h. das Tonsignal TSq desjenigen Teilnehmers, den man genauer hören möchte, wird entsprechend verstärkt, die Tonsignale TSq aller anderen werden gedämpft.

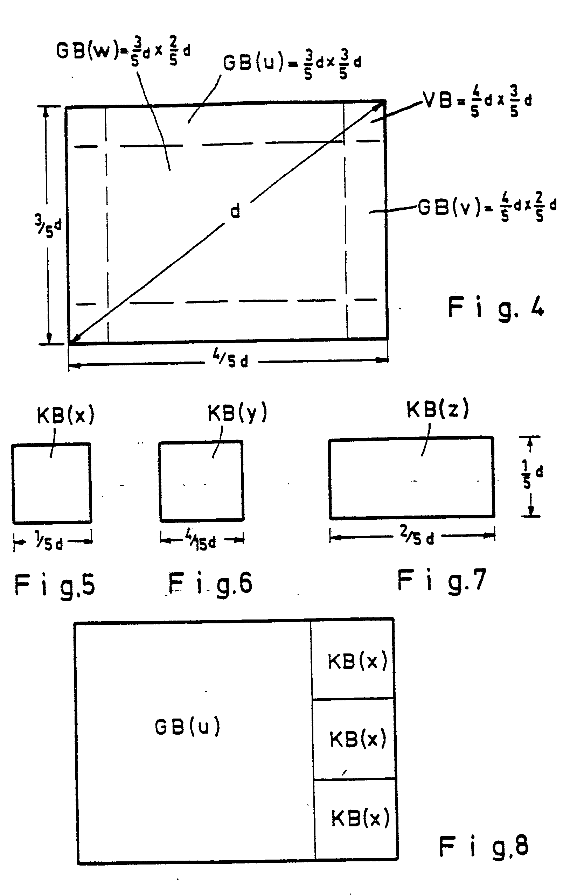

In Fig. 4 ist die Bildschirmgröße für einen Monitor mit üblicher TV-Norm maßstabsgetreu dargestellt. Ein Vollbild VB hat dabei die Breite 4/5 d und die Höhe 3/5 d, mit d als Diagonale des Vollbildes. Als Großbild GB kommen Bildformate in Betracht, die im Hinblick auf die Abbildung eines Gesichts auf horizontale oder vertikale oder horizontale und vertikale Randbereiche verzichten. Eine Variante für ein Großbild GB(u) ist z. B. nur in der Breite reduziert, hat also die Abmessungen 3/5 d × 3/5 d, wobei d weiterhin hier immer die Diagonale des Vollbildes VB ist. Ein Großbild GB(v) mit den Abmessungen 4/5 d × 2/5 d ist zweckmäßig für die Darstellung mehrerer Konferenzteilnehmer, die sich am selben Standort befinden, da hier nur auf horizontale Randbereiche verzichtet wird. Ein Großbild GB(w) mit den Abmessungen 3/5 d × 2/5 d verzichtet sowohl auf horizontale als auch auf vertikale Randbereiche.

Die Fig. 5, 6 und 7 geben drei verschiedene Formate für Kleinbilder KB an. Alle haben hier dieselbe Höhe 1/5 d, so daß hiermit die von Großbildern GB(u), GB(v), GB(w) entsprechend Fig. 3 nicht benötigten Flächen eines Vollbildes VB genutzt werden können. Als Breiten für solche Kleinbilder KB sind die Abmessungen 1/5 d für Kleinbild KB(x), 4/15 d für Kleinbild KB(y) und 2/5 d für Kleinbild KB(z) zweckmäßig. Welche Groß- und Kleinbildformate jeweils in der Bildkonferenz-Zentrale BZ zur Verfügung gestellt werden, hängt insbesondere von der Anzahl der maximal als ein Mischbild MB mit dem Format eines Vollbildes VB darzustellenden Abbilder der mehrere, an sich nicht unbedingt notwendige Formate für Groß- und Kleinbilder zur Verfügung gehalten, erhöht sich der Rahmen, in dem individuelle Bildregiewünsche realisiert werden können, entsprechend.

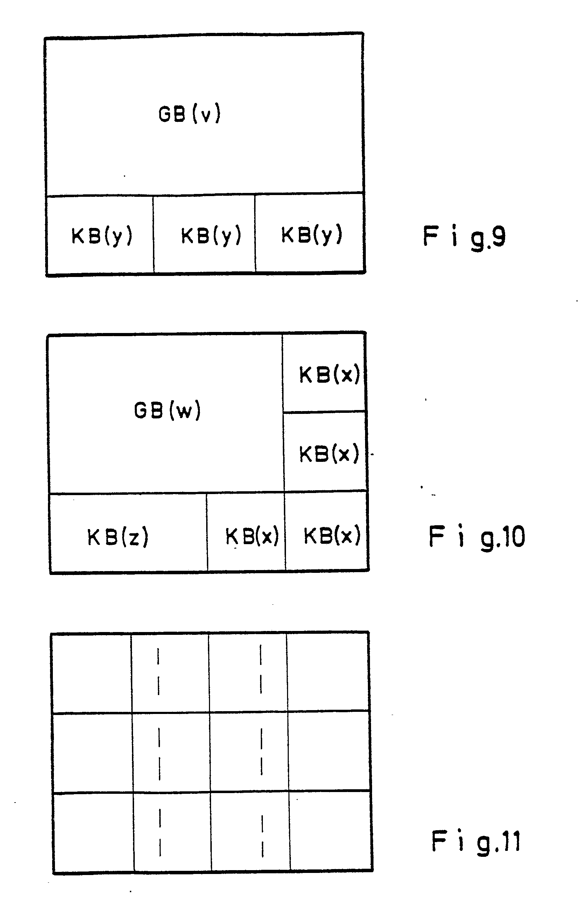

Die Fig. 8, 9 und 10 zeigen eine Auswahl von Zusammensetzungen von Großbildern GB(u), GB(v), GB(w) und Kleinbildern KB(x), KB(y), KB(z) zu Mischbildern MB, die Fig. 11 das Raster für maximal 12 Kleinbilder KB(x) bzw. — gestrichelt — für maximal 9 Kleinbilder KB(y). In jedem dieser Bilder kann, z. B. in einer oberen Ecke eine Kennmarke KM für den betreffenden Teilnehmer wiedergegeben werden (hier nicht dargestellt), für dessen Erzeugung in der Bildkonferenz-Zentrale BZ (vgl. Fig.1) ein entsprechender Signalgenerator GKM vorzusehen ist.

In der Fig. 12 ist ein Gerät mit den Bedienelementen dargestellt, die ein Teilnehmer für individuelle Regiekommandos benötigt.

Die Eingaben der Wähl-, Tonregie- oder Bildregieinformation erfolgen z. B. über eine herkömmliche Wähltastatur WE und über Schalter BE und Potentiometer TE. Diese Kommandos werden über die Anschlußeinheit (vgl. Fig. 1, AE) zur Bildkonferenzzentrale BZ gesendet. Die Teilnehmer erhalten Rückmeldungen über den Zustand ihrer Wähleinrichtung WE, der Tonregieeinrichtung TE, der Bildregieeinrichtung BE, der Anschlußeinheit AE, der Bildkonferenzzentrale BZ und dergleichen über die optische Zustandsanzeige ZA, z. B. Signallampen, alphanumerisches Display.

**Patentansprüche**

1. Nachrichtensystem für Bildkonferenzen, mit einer Vermittlungsanlage, in der von Teilnehmerstationen, die über verschiedene Standorte verteilt und deren Endeinrichtungen mit Quellen und Sinken für Bild- und Tonsignale, also Kamera, Monitor, Mikrofon, Lautsprecher, ausgestattet sind, die Hin- und Rückkanäle durchschaltbar sind, wobei bezüglich der Bildwiedergabe ein Zugriff auf die Quellensignale einzeln oder zu Mischbildern zusammengefaßt ermöglicht wird, gekennzeichnet durch

a) eine Bildkonferenz-Zentrale (BZ), die zur Übermittlung der Bildsignale (BSq, BSs) zwischen den Quellen (Qi) und Sinken (Si) der an einer Bildkonferenz beteiligten Standorte (SO) folgende Einrichtungen enthält:

- Bildspeicher (GSp, KSp) mit programmierbaren Schreib- und/oder Lesesteuerungen (SC, LC), von denen jeweils einer beim Aufbau einer Bildkonferenzschaltung der Quelle (Q) eines bestimmten Standorts (SO) zugeordnet wird, und von denen die von den einzelnen Quellen (Qi) empfangenen Kamera-Bildsignale (BSq) eines Vollbildes (VB) sowohl vollständig als auch zusätzlich als Großbild (GB) und in mindestens einem vergröberten Abbild (KB) zur Verfügung gestellt werden,

- Multiplexer (MUX), die ebenfalls beim Aufbau einer Bildkonferenzschaltung jeweils einer Sinke (S) eines bestimmten Standorts (SO) zugeordnet werden, einen wahlfreien Zugriff auf alle Kamera-Bildsignale (BSq) und die Bildspeicher (GSp, KSp) ermöglichen und für die einzelnen Sinken (Si) spezifische Monitor-Bildsignale (BSs) liefern, die entweder einem vollständigen Bildsignal einer bestimmten Quelle (Q) oder einem aus einem Großbild (GB) und/oder mehreren Kleinbildern (KB) zusammengesetzten Signal eines Mischbildes (MB) entsprechen,

- Bildregie-Steuerungen (BG), die über Steuerinformationen von den einzelnen Standorten (SO) oder ersatzweise über vorgegebene Standardprogramme die spezifischen Monitor-Bildsignale (BSs) für die einzelnen Sinken bilden ;

b) Endeinrichtungen (EE) an anschaltbaren Standorten (SO), die außer den Quellen (Qi) und Sinken (Si) für Bild- und Tonsignale (BS, TS) und üblichen Wähleinrichtungen (WE) für den Aufbau einer Fernmeldeverbindung eine Bildregie-Wähleinrichtung (BE) enthalten ;

c) Anschlußleitungen (AL) zwischen allen anschaltbaren Standorten (SO) und der Bildkonferenz-Zentrale (BZ) für jeweils einen Kanal (HK, RK) ausreichender Bandbreite in Hin- und Rückrichtung.

2. Bildkonferenz-Nachrichtensystem nach Anspruch 1, gekennzeichnet durch Analog-Digital-Wandler (A/D) und Digital-Analog-Wandler (D/A) vor den Signaleingängen der Bildspeicher (GSp, KSp) bzw. hinter den Ausgängen der Multiplexer (MUX) in der Bildkonferenz-Zentrale.

3. Bildkonferenz-Nachrichtensystem nach Anspruch 1 oder 2, gekennzeichnet durch gruppenweise mit je 3 bis zu etwa 12 zum Zwecke einer Bildkonferenz zusammenschaltbaren Bildspeicher (GSp, KSp) und Multiplexern (MUX) und je einer Bildregie-Steuerung (BC) und Schreib- und Lesesteuerung (SC, LC) für eine solche Gruppe in der Bildkonferenz-Zentrale (BZ).

4. Bildkonferenz-Nachrichtensystem nach einem der Ansprüche 1 bis 3, gekennzeichnet durch Bildspeicher (GSp) mit einer Speicherkapazität für jeweils ein Großbild (GB) zuzüglich dessen vergröberte Abbilder (KB).

5. Bildkonferenz-Nachrichtensystem nach einem der Ansprüche 1 bis 4, gekennzeichnet durch eine Schaltungsanordnung (TP) zur Erzeugung vergröberter Abbilder (KB) eines Vollbildes (VB) durch zweidimensionale Reduzierung der Bildpunkteanzahl, in horizontaler Richtung im Verhältnis h : 1, in vertikaler Richtung im Verhältnis v : 1, mit insbesondere h = 4, 3 oder 2, und v = 3.

6. Bildkonferenz-Nachrichtensystem nach Anspruch 5, gekennzeichnet durch eine programmierbare Schreibsteuerung (SC) für die Schaltungsanordnung (TP) zur Erzeugung von vergröberten Abbildern (KB), die das Maß der Reduzierung der Bildpunkteanzahl in Abhängigkeit von der Anzahl der an einer Bildkonferenz beteiligten Standorte (SO) sowie der Anzahl der an einem solchen Standort (SO) befindlichen Teilnehmer vorgibt.

7. Bildkonferenz-Nachrichtensystem nach Anspruch 6, gekennzeichnet durch eine programmierbare Schreib- und Lesesteuerung (SC, LC) für die Bildspeicher (GSp, KSp), die für die Bildregie-Steuerung (BC) die möglichen Orte der Wiedergabe eines Großbildes (GB) und von Kleinbildern (KB) auf einem Monitor fest vorgibt.

8. Bildkonferenz-Nachrichtensystem nach Anspruch 6 oder 7, gekennzeichnet durch einen Signalgenerator (GKM), der in jedes Vollbild (VB), Großbild (GB) und Kleinbild (KB) eine für eine Quelle (Q) spezifische Kennmarke (KM) einfügt.

9. Bildkonferenz-Nachrichtensystem nach einem der Ansprüche 1 bis 8, gekennzeichnet durch getrennte Anschlußleitungen (AL) für den Hin- und den Rückkanal (HK, RK) in einem Sternnetz mit der Bildkonferenz-Zentrale (BZ) im Sternpunkt und den zu Bildkonferenzen zusammenschaltbaren Standorten (SO) an den anderen Enden der Anschlußleitungen.

10. Bildkonferenz-Nachrichtensystem, insbesondere nach Anspruch 1, gekennzeichnet durch

a) eine Bildkonferenz-Zentrale (BZ), die zur Übermittlung der Tonsignale (TS) zwischen den Quellen (Qi) und Sinken (Si) der an einer Bildkonferenz beteiligten Standorte (SO) folgende Einrichtungen enthält :

- Tonmischer (TM) für Mehrkanalmischung und -übertragung, die jeweils einem Multiplexer (MUX) für Monitor-Bildsignale (BSs) fest zugeordnet sind und denen die Mikrofonsignale (TSq) aller betreffenden Standorte (SO) einzeln regelbar zugeführt werden und diese für den jeweiligen Standort (SO) zu einem mehrkanaligen Lautsprechersignal (TSs) zusammenfassen,

- Tonregiesteuerungen (TC), von denen jeweils eine einer Bildregiesteuerung (BC) fest zugeordnet ist und die über Steuerinformationen von den einzelnen Standorten (SO) spezifisch beeinflußbare Lautsprechersignale (TSs) für die einzelnen Sinken (Si) bilden, und

b) Endeinrichtungen (EE) an anschaltbaren Standorten (SO), die außer den Quellen (Qi) und Sinken (Si) für Bild- und Tonsignale (BS, TS) und üblichen Wähleinrichtungen (WE) für den Aufbau einer Fernmeldeverbindung eine Tonregie-Wähleinrichtung (TE) enthalten.

11. Bildkonferenz-Nachrichtensystem nach Anspruch 10, gekennzeichnet durch eine Tonregiesteuerung (TC), die die Tonmischer (TM) für eine Verteilung der Tonsignale (TS) entsprechend den Bildsignalen (BS) für jeden Standort (SO) frei wählbar oder ersatzweise über vorgegebene Standprogramme ansteuert.

## Claims

1. Communication system for video conferences with a network installation in which the forward and reverse channels of participating stations, which are spread across various sites and the terminal equipment of which is provided with sources and sinks for image and sound signals, that is camera, monitor, microphone,

loud-speaker, can be connected through, enabling access, with regard to the image reproduction, to the source signals, individually or combined into merged images, characterized by :

a) a video conference centre (BZ) which contains the following equipment for the transmission of the image signals (BSq, BSs) between the sources (Qi) and sinks (Si) of the sites (SO) participating in a video conference :

- image stores (GSp, KSp) with programmable write and/or read controls (SC, LC) of which one image store in each case, in the construction of a video conference connection, is allocated to the source (Q) of a particular site (SO) and by which the camera image signals (BSq) of a complete image (VB), received by the individual sources (Qi), are made available both completely and additionally as a large image (GB), and in at least one coarsened image (KB),

- multiplexers (MUX) which in the construction of a video conference connection are likewise each allocated to a sink (S) of a particular site (SO) ; they make possible an optional access to all camera image signals (BSq) and the image stores (GSp, KSp) and supply specific monitor image signals (BSs) to the individual sinks (Si), the signals corresponding either to a complete image signal of a particular source (Q) or to a signal of a mixed image (MD) comprising a large image (GB) and/or several small images (KB),

- image production controls (BC) which form the specific monitor image signals (BSs) for the individual sinks by way of control information from the individual sites (SO) or alternatively by way of given standard programmes ;

b) terminal equipment (EE) at sites (SO) which can be connected and which, apart from the sources (Qi) and sinks (Si) for image and sound signals (BS, TS) and usual dial system equipment (WE) for the construction of a telecommunications connection, contains an image control selection installation (BE) ;

c) junction circuits (AL) between all sites (SO) which can be connected and the video conference centre (BZ) for one channel (HK, RK) in each case of sufficient bandwidth in forward and reverse direction.

2. Video conference communication system according to claim 1, characterized by analog-to-digital converters (A/D) and digital-to-analog converters (D/A) in front of the signal inputs of the image stores (GSp, KSp) or behind the outputs of the multiplexers (MUX) in the video conference centre.

3. Video conference communication system according to claim 1 or 2, characterized by groups each with 3 to about 12 image stores (GSp, KSp) and multiplexers (MUX) which can be connected together for the purpose of a video conference and each with an image production control (BC) and write and read control (SC, LC) for such a group in the video conference centre (BZ).

4. Video conference communication system according to one of claims 1 to 3, characterized by image stores (GSp, KSp) each with a storage capacity for a large image (GB) including its coarsened images (KB).

5. Video conference communication system according to one of claims 1 to 4, characterized by a connection arrangement (TP) for producing coarsened images (KB) of a complete image (VB) by two-dimensional reduction of the number of image points, in a horizontal direction in the relationship h : 1, in a vertical direction in the relationship v : 1, with in particular h = 4, 3 or 2, and v = 3.

6. Video conference communication system according to claim 5, characterized by a programmable write control (SC), for the connection arrangement (TP) for producing coarsened images (KB), which asserts the extent of the reduction of the number of picture elements depending on the number of sites (SO) participating in a video conference as well as on the number of participants which are found at such a site (SO).

7. Video conference communication system according to claim 6, characterized by a programmable write and read control (SC, LC) for the image stores (GSp, KSp) which asserts positively the possible areas of the reproduction of a large image (GB) and of small images (KB) on a monitor for the image mixing control (BC).

8. Video conference communication system according to claim 6 or 7, characterized by a signal generator (GKM) which inserts a tag (KM), specific to a source (Q), into every complete image (VB), large image (GB) and small image (KB).

9. Video conference communication system according to one of claims 1 to 8, characterized by separate junction circuits (AL) for the forward and the reverse channel (HK, RK) in a star network, with the video conference centre (BZ) in the star point and the sites (SO), capable of being connected together to video conferences, at the other ends of the junction circuits.

10. Video conference communication system, more particularly according to claim 1 characterized by:

a) a video conference centre (BZ) which, for the transmission of the sound signals (TS) between the sources (Qi) and sinks (Si) of the sites (SO) participating in a video conference, contains the following equipment :

- sound mixers (TM) for multi-channel mixing and transmitting, each of which is firmly adjoined to a multiplexer (MUX) for monitor image signals (BSs), and to which the microphone signals (TSq) of all sites (SO) concerned are supplied as individually adjustable, and which connect these together to a multi-channeled loudspeaker signal (TSs) for each site (SO),

- sound production controls (TC) each of which is firmly adjoined to an image production control (BC) and which, by way of control information from the individual sites (SO), form specific susceptible loudspeaker signals (TSs) for the individual sinks (Si), and

b) terminal equipment (EE) on sites (SO) which can be connected and which, apart from the sources (Qi) and sinks (Si) for image and sound signals (BS, TS) and usual dial system equipment (WE) for the construction of a telecommunications connection, contains a sound control selection installation (TE).

11. Video conference communication system according to claim 10, characterized by a sound production control (TC) to drive the sound mixers (TM) freely or alternatively by way of given fixed programmes, for a distribution of the sound signals (TS) corresponding to the image signals (BS) for every site (SO).

## Revendications

1. Système de transmissions pour vidéo-conférences, avec une installation centrale dans laquelle peuvent être interconnectés des canaux d'aller et de retour de postes d'abonnés qui sont répartis en différentes positions et dont les installations terminales sont équipées de sources et de puits pour des signaux d'image et de son, donc de caméras, de moniteurs, de microphones, de haut-parleurs, où, en ce qui concerne la restitution des images, un accès est rendu possible aux signaux des sources, individuellement ou groupés pour former des images mélangées, caractérisé par :

a) une centrale de vidéo-conférence (BZ) qui contient les dispositifs suivants pour la transmission des signaux d'image (BSq, BSs) entre les sources (Qi) et les puits (Si) des positions (SO) participant à une vidéo-conférence :

- des mémoires d'image (GSp, KSp) avec des commandes programmables d'écriture et/ou de lecture (SC, LC) dont chaque fois une est associée, lors de l'établissement d'une commutation de vidéo-conférence, à la source (Q) d'une position (SO) déterminée, et dont les signaux d'image (BSq) de caméras, reçus des différentes sources (Qi), d'une image complète (VB), sont mis à disposition aussi bien complètement que, aussi, à titre supplémentaire, comme grande image (GB) et au moins dans une représentation grossière (KB),

- des multiplexeurs (MUX) qui sont également associés, lors de l'établissement d'une commutation de vidéo-conférence, chaque fois à un puits (S) d'une position (SO) déterminée, permettant un accès facultatif à tous les signaux d'image de caméra (BSq) et aux mémoires d'image (GSp, KSp) et fournissant, pour les différents puits (Si), des signaux d'image de moniteur spécifiques qui correspondant soit à un signal d'image complet d'une source déterminée (Q), soit à un signal d'une image mélangée (MB), composé d'une grande image (GB) et/ou de plusieurs petites images (KB),

- des commandes de régie d'image (BC) qui, par l'intermédiaire d'informations de commande des différentes positions (SO) ou, en substitution, par l'intermédiaire de programmes normaux fixés à l'avance, forment, pour les différents puits, les signaux d'image de moniteur spécifiques (BSs) ;

b) des installations terminales (EE) dans des positions (SO) branchables qui, en outre des sources (Qi) et des puits (Si) pour les signaux d'image et de son (BS, TS) et des installations ordinaires de sélection (WE) pour l'établissement d'une liaison à distance, contiennent une installation de sélection de régie d'image (BE) ;

c) des lignes de raccordement (AL) entre toutes les positions (SO) raccordables et la centrale de vidéo-conférence (BZ) pour chaque fois un canal (HK, RK) de largeur de bande suffisante dans le sens d' aller et de retour.

2. Système de transmissions pour vidéo-conférences suivant la revendication 1, caractérisé par des convertisseurs analogique/digital (A/D) et digital/analogique (D/A) devant les entrées de signal des mémoires d'image (GSp, KSp), respectivement derrière les sorties des multiplexeurs (MUX) dans la centrale de vidéo-conférence.

3. Système de transmissions pour vidéo-conférences suivant la revendication 1 ou 2, caractérisé par l'association en groupe de 3 à environ 12 de mémoires d'image (GSp, KSp) et de multiplexeurs (MUX) commutables ensemble dans le but d'une vidéoconférence, et par chaque fois une commande de régie d'image (BC) et une commande d'écriture-lecture (SC, LC) pour un tel groupe dans la centrale de vidéoconférence.

4. Système de transmissions pour vidéo-conférences suivant l'une des revendications 1 à 3, caractérisé par des mémoires d'image (GSp, KSp) avec une capacité de mémoire pour chaque fois une grande image (GB) en plus de ses représentations grossière (KB).

5. Système de transmissions pour vidéo-conférences suivant l'une des revendications 1 à 4, caractérisé par un agencement de commutation (TP) pour engendrer des représentations grossières (KB) d'une image complète (VB) par réduction en deux dimensions du nombre des points d'image, dans le sens horizontal dans le rapport de h :1, dans le sens vertical dans le rapport de v :1, avec en particulier h = 4, 3 ou 2 et v = 3.

6. Système de transmissions pour vidéo-conférences suivant la revendication 5, caractérisé par une commande d'écriture programmable (SC) pour l'agencement de commutation (TP) pour engendrer des représentations simplifiées (KB), qui détermine la mesure de la réduction du nombre de points d'image en dépendance du nombre des positions (SO) participant à une vidéo-conférence, ainsi que du nombre des participants se trouvant en une telle position (SO).

7. Système de transmissions pour vidéo-conférences suivant la revendication 6, caractérisé par une commande programmable d'écriture et de lecture (SC, LC) pour les mémoires d'image (GSp, KSp), qui fixe, pour la commande de régie d'image (BC), les lieux possibles de la reproduction d'une grande image (GB) et de petites images (KB), sur un moniteur.

8. Système de transmissions pour vidéo-conférences suivant la revendication 6 ou 7, caractérisé par un générateur de signaux (GKM) qui, dans chaque image complète (VB), grande image (GB) et petite image (KB), introduit une marque caractéristique spécifique (KM) pour une source (Q).

9. Système de transmissions pour vidéo-conférences suivant l'une des revendications 1 à 8, caractérisé par des lignes de raccordement (AL) pour le canal d'aller et le canal de retour (HK, RK) dans un réseau en étoile avec la centrale de vidéo-conférence (BZ) au sommet de l'étoile et les positions (SO) simultanément commutables pour les vidéo-conférences aux autres extrémités des lignes de raccordement.

10. Système de transmissions pour vidéo-conférences, en particulier suivant la revendication 1, caractérisé par

a) une centrale de vidéo-conférence (BZ) qui contient les dispositifs suivants pour la transmission de signaux de son (TS) entre les sources (Qi) et les puits (Si) des positions (SO) participant à une vidéo-conférence :

- des mélangeurs de son (TM) pour le mélange et la transmission sur canaux multiples qui, chaque fois, sont associés de façon fixe à un multiplexeur (MUX) pour des signaux d'image de moniteur (BSs) et auxquels sont amenés les signaux de microphones (TSq) de toutes les positions intéressées, de façon individuellement réglable, et groupent ceux-ci en un signal de haut-parleur à plusieurs canaux (TSs), pour la position (SO) considérée chaque fois,

- des commandes de régie du son (TC) dont une chaque fois est associée de façon fixe à une commande de régie d'image (BC) et qui forment pour les différents puits (Si) déterminées des signaux de haut-parleur (TSs) influençables spécifiquement par l'intermédiaire d'informations de commande venant des différentes positions correspondants (SO) ;

b) des dispositifs terminaux (EE) à des positions (SO) raccordables, qui contiennent un dispositif sélecteur de régie de son (TE), en dehors des sources (Qi) et des puits (Si) pour des signaux d'image et de son (BS, TS) et des dispositifs sélecteurs habituels (WE) pour l'établissement d'une liaison à distance.

11. Système de transmissions pour vidéo-conférences suivant la revendication 10, caractérisé par une commande de régie de son (TC) qui commande les mélangeurs de son (TM) pour une distribution des signaux de son (TS) de manière correspondante aux signaux d'image (BS) pour chaque position (SO) de manière librement sélective ou en substitution suivant des programmes de position fixés.

# Fig.1

SO-E

SO-D

SO-C

SO-B

AE

SO-A

TSs
TSq
EE
BSq
TSs
Ss

WE BE TE

AL
HK
RK
KSp
MUX
RK
AL
HK
TM
BC
TC
GSp
GKM
AL
BZ
AL

# Fig.2

SC

Sync
Abtr
Schreib-
Adressen
TP
2-d-
Tiefpaß
GSp
KSp
Klein
Bild
Mux
BSq
AD
FiFo
Groß
Bild
Mux
Sende
Takt
Lese-
Adressen
LC
BCP
DA → BSs
Adress-
Programm
Bildregie-
Programm
DA
DA
Steuersignale
von den Teilnehmern

Fig. 3

Fig.12

$GB(w) = \frac{3}{5}d \times \frac{2}{5}d$   $GB(u) = \frac{3}{5}d \times \frac{3}{5}d$

$VB = \frac{4}{5}d \times \frac{3}{5}d$

$GB(v) = \frac{4}{5}d \times \frac{2}{5}d$

$\frac{3}{5}d$

d

$\frac{4}{5}d$

Fig. 4

KB(x)  KB(y)  KB(z)

$\frac{1}{5}d$

$\frac{1}{5}d$   $\frac{4}{15}d$   $\frac{2}{5}d$

Fig.5   Fig.6   Fig.7

GB(u)

KB(x)

KB(x)

KB(x)

Fig.8

3

F i g.9

F i g.10

F i g.11